# EUROPEAN PATENT SPECIFICATION

(11) **EP 3 861 201 B1**
(45) Date of publication and mention of the grant of the patent: **03.01.2024**
(21) Application number: 19789586.5
(22) Date of filing: 01.10.2019
(51) Int. Cl.: F01M 1/08, F16N 7/38, F16N 13/04, F16N 29/02, F16N 13/16

(54) **SUBSTITUTION OF A VALVE SEAT FOR IMPROVING A LUBRICATOR PUMP UNIT AND LUBRICATION SYSTEM OF A LARGE SLOW-RUNNING TWO-STROKE ENGINE, AND AN IMPROVED LUBRICATOR PUMP UNIT**
ERSATZ EINES VENTILSITZES ZUR VERBESSERUNG EINER SCHMIERPUMPENEINHEIT UND SCHMIERSYSTEM EINES GROSSEN LANGSAM LAUFENDEN ZWEITAKTMOTORS UND EINE VERBESSERTE SCHMIERPUMPENEINHEIT
REMPLACEMENT D'UN SIÈGE DE SOUPAPE POUR AMÉLIORER UNE UNITÉ DE POMPE À LUBRIFIANT ET UN SYSTÈME DE LUBRIFICATION D'UN GROS MOTEUR À DEUX TEMPS LENT, ET UNITÉ DE POMPE À LUBRIFIANT AMÉLIORÉE

(30) Priority: 02.10.2018 DK PA201870649
(43) Date of publication of application: 11.08.2021
(73) Proprietor: Hans Jensen Lubricators A/S, 9560 Hadsund (DK)
(72) Inventor: BAK, Peer, 9300 Sæby (DK); FLODGAARD, Emil, 9632 Møldrup (DK)
(74) Representative: Patrade A/S
(86) International application number: PCT/DK2019/050290
(87) International publication number: WO 2020/069707

(56) References cited:
- WO-A1-2016/015732
- CN-A- 107 762 655
- CN-A- 108 533 802
- CN-U- 202 266 710
- GB-A- 2 021 683
- JP-A- 2014 185 734

## Description

### FIELD OF THE INVENTION

The present invention relates to a method for improving a lubricator pump unit for a lubrication system in a large slow-running two-stroke engine. An existing lubrication system is modified for longer lifetime without leakage. For example, the large slow-running two-stroke engine is a marine engine or a large engine in power plants.

### BACKGROUND OF THE INVENTION

Due to the focus of on environmental protection, efforts are on-going with respect reduction of emissions from marine engines. This also involves the steady optimization of lubrication systems for such engines, especially due to increased competition. One of the economic aspects with increased attention is a reduction of oil consumption, not only because of environmental protection but also because this is a significant part of the operational costs of ships.

A lubrication system for marine engines is disclosed in German patent document DE19743955B4 and equivalent Danish patent DK173288B1. It discloses a lubrication system in which a central controller feeds lubricant to a lubricator for each cylinder of the marine engine. The lubricator distributes lubricant to a plurality of lubricant injectors distributed around the circumference of the cylinder. The lubricator comprises a housing in which a plurality of piston pumps are arranged around a circle and driven synchronous in common by a hydraulic driven actuator piston. Each of the piston pumps comprises an injection plunger that is pumping lubricant through a non-return valve to one of the injectors of a single cylinder. The hydraulic driven actuator piston is moving over an adjustable distance between its stationary rearward end stop and a forward end stop that is adjustable by an adjusting screw. For turning the adjusting screw, it is accessible at an end cap that covers a flange of the housing, through which the adjusting screw extends Other examples of lubrication systems for large slow-running engines are disclosed in WO2016/015732 A1 or CN107762655 A.

In connection with injection of compact jets of lubricant into marine engine cylinders and also for lubricant quills onto the piston between the piston rings, this system has gained widespread distribution and is marketed under the trade name Alpha Lubricator pump unit by the company MAN B&W Diesel and Turbo.

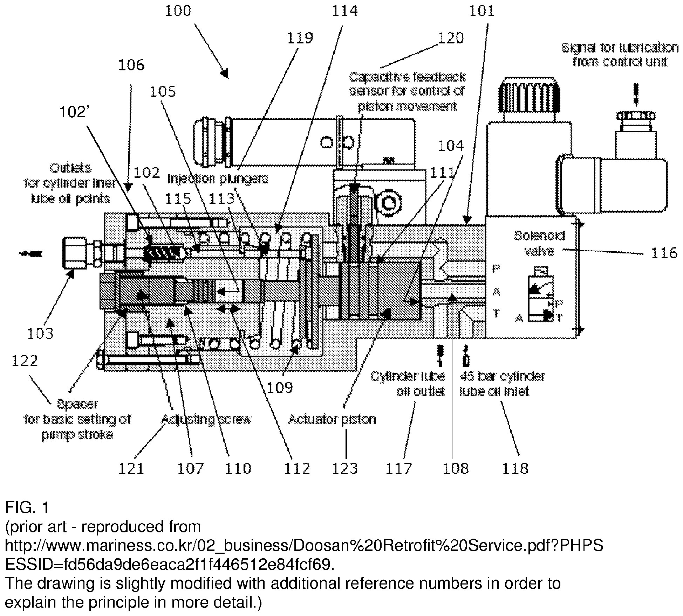

FIG. 1 illustrates an example of a lubricator pump unit for an Alpha lubrication system as it is found on the Internet page http://www.mariness.co.kr/02_business/Doosan%20Retrofit%20Service.pdf?PHPSES SID=fd56da9de6eaca2f1f446512e84fcf69.

The drawing is slightly modified with additional reference numbers in order to explain the principle in more detail. For simplicity, the lubricator pump unit for an Alpha lubrication system as marketed by MAN B&W Diesel and Turbo is called an "Alpha Lubricator" in the following. This term is in agreement with the normally used terminology in the technical field of marine engines and in agreement with related publications on the Internet and in technical literature.

Similar to the above mentioned DE19743955B4 and DK173288B1, the Alpha Lubricator 100 comprises a metal housing 101 in which a plurality of injection plungers 119 are arranged one a circle and driven synchronous in common by a hydraulic driven actuator piston 123. Each injection plunger 119 is arranged slidingly in a dosing channel 115 receiving lubricant from an internal volume 114 of the housing 101 through an inlet aperture 113. The inlet aperture 113 is closed by the injection plunger 119 during forward motion of the injection plunger 119 so that further forward motion by the injection plunger 119 pressurizes the received lubricant in the remaining part of the dosing channel 115 and pumps it through a non-return valve 102 into a pipe 103 and to one of the injectors of a single cylinder. During retraction of the actuator piston 123, caused by the pre-stressed spring 109, the injection plunger 119 is retracted, and vacuum created in the dosing channel 115, until the forward end of the injection plunger 119 is retracted past the inlet aperture 113 and lubricant can flow through the inlet aperture 113 and refill the dosing channel 115.

The volume of lubricant pressurized by the injection plunger 119 in the dosing channel 115 and expelled through the non-return valve 102 is defined by the travel distance of the injection plunger 119 from the inlet aperture 113 to the most forward position before retraction. During the movement of the actuator piston 123 over the stroke length, the first part of the movement of the injection plunger 119 past the inlet aperture 113, and only once the injection plunger 119 has moved past the inlet aperture 113 and closed it, the lubricant is pressurised and expelled from the remaining dosing channel distance.

The hydraulic driven actuator piston 123 is moving over an adjustable distance between its stationary rearward end stop 104 and a forward end stop 105 that is adjustable by an adjusting screw. For turning the adjusting screw 121, it is accessible at an end cap 106 that covers a flange 107 of the housing 101, through which the adjusting screw 121 extends. The flange 107 in the Alpha Lubricator 100 supports the spacer 122 and contains a threading 110 for adjustment of the adjusting screw 121. The reciprocal actuator piston 123 is driven by oscillating oil pressure in the volume 108 behind the actuator piston 123, where a solenoid valve 116 shifts between two pressure levels in this volume 108 behind the actuator piston 123. Once, the lower pressure level is reached, a spring 109 load presses the actuator piston 123 back to the rear end stop. The solenoid valve 116 is regulated by corresponding signals from a control unit.

As can be seen in FIG. 1, a spacer 122 for basic settings of the pump stroke is provided in the 107 flange behind the end cap 106, at which the head of the adjusting screw 121 is accessible for adjustment by rotation.

The Alpha Lubricator is different relatively the above mentioned patents DE19743955B4 and DK173288B1 in that a capacitive feedback sensor 120 is used to verify a sufficiently long stroke length of the hydraulic actuator.

This feedback sensor 120 is also illustrated in FIG 1. As shown, the hydraulic actuator piston comprises two circumferential grooves 111, and the feedback sensor 120 gives a confirmation signal of proper lubrication to the central controller if the stroke of the hydraulic actuator piston 123 is long enough for the second groove 111 to move pass the feedback sensor 120. When the first and second grooves 111 pass by the feedback sensor 120, the feedback sensor 120 creates a double-pulsed signal which the central controller takes as confirmation of proper lubrication. If only one the first groove 111 passes by the feedback sensor 120, the corresponding single-pulsed signal from the feedback sensor 120 indicates to the central controller general functioning of the feedback sensor 120 and movement of the actuator piston 123 over at least a small distance but not sufficient movement of the actuator piston 123 for proper lubrication. If the feedback sensor 120 is giving any signal, a warning message is provided by the controller that the stroke was not measured as long enough for proper lubrication.

The non-return valve 102 is provided inside a valve-chamber 102' and is build up traditionally by comprising a valve-member, in this case a spherical valve-member, pre-stressed against a valve-seat by a spring. The lubricant in the dosing channel 115 displaces the spherical valve-member against the pre-stressing force of the helical spring once the lubricant pressure rises above a predetermined limit where the force created by the pressurised lubricant is above the pre-stressed force. Once opened, the non-return valve 102 gives passage to the pipe 103 for lubricant flow to the injector as long as the pressure is at the increased state in the injection phase. When the oil pressure in the dosing channel 115 decreases below the predetermined limit, the non-return valve 102 closes again for the idle phase and stays closed until the next injection phase.

It has been found that the lubrication system for marine engines with the Alpha-type lubricator is not satisfactory after a relatively short time of functioning. As the entire system including the Alpha Lubricator is relatively expensive and long-term reliability is generally requested, it would be desirable to extend proper functioning over a longer time span.

### DESCRIPTION / SUMMARY OF THE INVENTION

It is an objective of the invention to provide an improvement in the art. A particular objective is to provide a method for improving a lubrication system with a lubricator of the type as described above, especially an Alpha lubrication system with an Alpha Lubricator. The objectives are met by a method according to claim 1 or 6, or by a lubricator according to claim 9.

The term "lubricator" is used herein for a lubricator pump unit that pressurizes and doses the lubricant for the lubricant injectors in the corresponding large slow-running two-stroke engine, typically fuelled with diesel or gas fuel. The lubricator and its function are explained in detail below with reference to the Alpha Lubricator as an example, which was described above with reference to FIG. 1.

The term "injection phase" is used for the time during which lubricant is injected into the cylinder by an injector. The term "idle phase" is used for the time between injection phases. The term "injection-cycle" is used for the time it takes to start an injection sequence and until the next injection sequence starts, an injection sequence typically involving all lubricant injectors in each injection sequence. For example, the injection sequence comprises a single injection by each injector, in which case the injection-cycle is measured from the start of the injection phase to the start of the next injection phase. The term "timing" of the injection is used for the adjustment of the start of the injection phase by the injector relatively to a specific position of the piston inside the cylinder.

For intervals stated as between a first value and a second value, the end points are optionally included.

Surface roughness is expressed as the arithmetic average roughness value Ra.

Thorough study of the problem with the relatively short lifetime of the Alpha lubrication system has revealed that the reduced performance is due to leakage from the non-return valve in the Alpha Lubricator. This is surprising, as it is not a component that is generally believed to face degradation problems after relatively short function. In studies, it has been found that the on-return valve leaked already after 1 million cycles. Although, 1 million cycles may appear as a large number at first sight, this is not so in practice, as it may correspond to less than the time lapse between subsequent maintenance stops of the engine.
Especially, if the Alpha Lubricator is used for lubricant injection at elevated pressure, the problem is more pronounced

The recognition that the problem was due to leakage in the non-return valve of the Alpha Lubricator was a very useful finding in that the functioning of the entire lubrication system had the potential for improvement by modifying only a relatively small component, namely the non-return valve of the used lubricator.

From the recognition of the problem of the leakage, a technical solution was not straightforward. Especially, a mere exchange of the lubricator would not only be an expensive solution but also limit the functioning to only a further 1 million lubricant injection cycles. It was therefore an additional objective to provide an upgrade to the Alpha Lubricator.

This objective was achieved by substituting the lubricator valve-seat in the valve-chamber by an insert valve-seat that has a higher dimensional precision. Examples of higher precision are lower surface roughness and precise circular symmetry.

The term lubricator valve seat is used for the valve seat that comes standard with the lubricator, and the term insert valve seat is used for a valve seat that is part of a insert inserted into the valve camber of the lubricator.

In experiments, it has been recognized that increased precision, especially reduction of the surface roughness of the valve seat has significant impact on the lifetime and tightness of the non-return valve, more than doubling the lifetime, which is probably due to tighter contact between the valve member and the valve seat and more even wear.

The insert valve seat is provided with a surface roughness of less than 12.5µm, optionally less than 6.3µm or less than 1.6µm. Optionally, the surface roughness is in the range of 12.5 to 0.8µm, 16.3 to 0.8µm, or 1.6 to 0.8µm. For example, the insert valve seat has a concave surface. A useful concave surface is a part-spherical shape where the valve follows a part of a sphere.

However, an insert valve seat with a conical shape is also possible.

As a further option, the insert valve seat has convex shape. An example is a convex valve seat that is shaped as a circular-symmetric torus, for example with an elliptical or circular cross section. If also the valve member is convex, for example spherical, the valve member and the toroidal valve seat have a mutual ring of contact which is very narrow due to the tangential contact. A narrow ring of contact is also obtained between such torus and a conical valve member.

After modification, a valve member is loaded into the valve chamber for tightening against the valve seat along a circular ring after modification of the valve seat.

For example, the insert valve seat has concave shape with a first radius of curvature, wherein the first radius of curvature is measured orthogonal to the insert valve seat. The term "orthogonal to the insert valve seat" is to be understood as orthogonal to the plane containing the ring of contact between the valve seat and the valve member. Optionally, the insert valve seat has a first radius of curvature that is not less than a second radius of curvature of a convex valve member, typically ball member, which is closing the valve by being pre-stressed against the valve seat.

For example, the valve member is the same as the one that was inside the valve chamber prior to modification. Alternatively, a new valve member is loaded, for example having a different size and or shape. A typical valve member is of spherical shape so that the valve is a non-return ball valve.

Typically, the valve member is made of metal, for example steel. Alternatively, the valve member is made of polymer or ceramics.

In some embodiments, the radius of curvature for the valve seat is the same or approximately the same as the valve member. In other embodiments, the radius of curvature for the valve seat is larger, for example within 5-50% larger, than the radius of curvature of the valve member, for example ball member. In this case, the curvature of the valve seat is sufficient to guide the curved valve member to rest centrally on the valve seat. However, due the different curvatures, the ring of contact between the convex surface of the valve member and the concave surface of the valve seat is relatively thin, which is an advantage for good tightness and quick response of the non-return valve.

For example, the thickness of the ring-formed contact surface between the valve member and the valve seat is in the range of 0.01 to 0.5 mm, optionally in the range of 0.05 and 0.5 mm or in the range of 0.1 mm to 0.5 mm, if the valve seat has a diameter of 3 to 10 mm. In terms of an angular span in the polar angle, this corresponds roughly to 0.1 to 10 degrees. In some practical embodiments, a useful polar contact angle is in the range of 0.1 to 5 degrees. For example, the contact surface between the valve member and the valve seat has an area in the range of 0.1 mm2 to 2 mm2.

Typically, the valve member is 30-100% larger than the inner diameter of the valve seat. For example, of the inner diameter of the valve seat is 3 mm, the ball member is in the range of 4-6 mm in diameter. For example, the inner diameter of the valve seat is approximately equal to the diameter of the conduit which is upstream of the valve seat and closed by the non-return valve.

In the case of the radius of curvature of the modified concave valve seat being larger that the radius of curvature of the convex valve member, there is no requirement for precision of the radius of curvatures between the valve seat and the valve member. This makes the modification process relatively simple.

The lack of constraint of the valve seat and the valve member having the same radius of curvature also allows other concave shapes for the valve seat, for example ellipsoidal, parabolic, or hyperbolic. It is even possible to use a conical shape.

For the long lifetime, however, the valve seat is circular symmetric. The circular symmetry varies by less than 0.2 mm, for example less than 0.1 mm, when measured across the valve seat.

In some embodiments, the valve-seat in the valve-chamber is modified from a non-spherical shape into a shape that is part-spherical. The part-spherical valve-seat resembles the surface of a spherical segment, also called a spherical frustum. In the following, a valve-seat with such shape is called a part-spherical valve-seat.

Optionally, in order to improve the system further, a further non-return valve is added to the lubricator such that a double valve system is provided. A double valve system improves the tightness and longevity of the system. For example, a further non-return valve is added in series to the non-return valve of the insert.

Such additional non-return valve is potentially attached to the lubricator housing at the lubricant exit. Optionally, the further non-return valve comprises a part-spherical valve-seat.

Alternatively, the insert is provided with a double valve system comprising two serially arranged insert valve seats for two serially arranged non-return valves.

In some embodiments, the two insert valve seats have the same dimensions. Optionally also the cooperating valve members have the same size and shape.

Alternatively, the two insert valve seats arranged serially as an upstream insert valve seat and a downstream insert valve seat have different dimensions. For example, the upstream insert valve seat is smaller than the downstream valve seat. Correspondingly, the upstream valve member on the upstream insert valve seat is smaller than the downstream valve member on the downstream insert valve seat. Optionally, the pre-stressing of the upstream valve member against the upstream insert valve seat is done by a spring resting against the downstream valve member, which in turn is pre-stressed against the downstream insert valve seat by a further and stronger spring in order for the further spring to provide sufficient force for pre-stressing both valve members against their respective seats.

Typically, the insert is made of metal, for example steel. Options include precision working of a solid piece of metal. Other options are moulding the metal insert and potentially providing a final precision working after moulding in order to obtain a high dimensional precision.

Alternatively, the insert is made of ceramics.

However, polymer inserts are also possible, for example moulded polymer, optionally containing a reinforcement material, for example powders or fibers. A further option is three-dimensional printing of inserts. Optionally, the moulded or printed inserts are precision-worked after printing in order to obtain a high dimensional precision.

Examples of working techniques are electrical discharge machining, drilling, milling, welding, grinding, polishing, etching, plating, or electrolytic machining. The list is not exclusive.

Even possible is a production of a metal insert with an insert valve seat as a raw structure, which is then deformed by a deformation member hammered or pressed onto the seat, where the deformation member is formed as a mirror template. This technique has been used in experiments on a lubricator seat, which improved longevity, which is explained in more detail below.

For example, the method comprises operating the lubricator in the lubrication system for at least 100,000 lubrication injection cycles prior to the modification, and operating the lubrication system with the lubricator and the modified non-return valve after the modification.

However, the modification is potentially made before a new lubricator, such as the above mentioned Alpha lubricator, starts its operation.

In more detail, a concrete embodiment of the lubrication system is explained in the following.

The lubrication system provides lubricant to injectors for lubricating the cylinder or cylinders in a large slow-running two-stroke engine engine, for example a marine engine or a large engine in power plants. Typically, the engine is burning diesel or gas fuel. The engine comprises one or more cylinders, each with a reciprocal piston inside and with a plurality of lubricant injectors distributed along a perimeter of the cylinder for injection of lubricant into the cylinder at various positions on the perimeter during injection phases.

The lubrication system comprises a lubricator that is pipe-connected to each injector by a lubricant feed conduit, for example one feed conduit for each injector, for providing pressurized lubricant to each injector though the lubricant feed conduit during the injection phases.

The lubricator is of the type that comprises a housing, typically metal housing, in which a hydraulic-driven actuator piston is arranged reciprocal with a stroke length along a stroke direction. Optionally, the lubricator further comprises a stroke length adjustment mechanism configured for variably adjusting the stroke length of the reciprocal hydraulic-driven actuator piston between a minimum stroke length and a maximum stroke length.

The lubricator further comprises a plurality of injection plungers slidingly arranged in corresponding dosing channels, wherein the injection plungers are coupled to the actuator piston in order to be moved by the actuator piston and for pressurizing lubricant in the dosing channels during this movement. When the actuator piston is moved over the stroke length, the injector plungers are moved over a corresponding length. The movement the injection plungers inside the dosing channel pressurizes the lubricant in the dosing channel while the injection plungers move over a dosing channel distance, where the dosing channel distance defines the volume of lubricant in a pumping action expelled from the dosing channel during the injection phase through a non-return valve and through the feed conduit to the injector for injection of the lubricant into the engine cylinder.

For example, the dosing channel distance is equal to or less than the stroke length. This depends on the configuration. Optionally, the dosing channel distance is adjustable between a minimum dosing channel distance and a maximum dosing channel distance corresponding to the actuator piston's variable stroke length between the minimum stroke length and the maximum stroke length.

The lubricator also comprises a valve, typically electrical valve, arranged for causing switch between hydraulic pressure levels that are acting on the actuator piston in order to hydraulically drive the actuator piston reciprocally by the switching pressure levels. Typically, the actuator piston is pre-stressed against the rear end stop by a helical spring.

In some concrete embodiments, the lubricator receives high pressure oil for driving the actuator piston, and the valve switches between
a) access of the pressurized oil to the actuator piston in the injection phase and
b) connection between the actuator piston and a drain for drainage of oil from the actuator piston between injection phases.

The lubrication system further comprises a controller that controls the switching of the valve. In the case of an electrical valve, the controller is electrically connected to the electrical valve for controlling the timing of the switching for the injection phases by corresponding electrical signals transmitted from the controller to the electrical valve. Alternatively, the controller operates a high pressure valve upstream of the lubricator in order to provide switching of the high pressure oil for driving the actuator piston.

According to the above objective, the lubrication system is improved by modifying the non-return valve of the lubricator such that the valve-seat, typically metal valve seat, in the valve-chamber is improved, typically after a certain time of operation, but possibly also prior to start of operation while the lubricator is still new. The final technical solution turned out to be a simple modification of existing lubricators at relatively low cost, nevertheless solving the short-life problem of lubrication systems.

For clarification, it is pointed out that the term "injector" is used for an injection valve system comprising an injector housing having a lubricant inlet port, flow-connected to the lubricant feed conduit for receiving lubricant from it for injection into the cylinder. The injector further comprises one single injection nozzle with a nozzle aperture as a lubricant outlet that extends into the cylinder for injecting lubricant from the inlet port into the cylinder in the injection phase. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

For example, each of the injectors comprises an outlet-valve system at the nozzle configured for opening for flow of lubricant to the nozzle aperture during an injection phase upon pressure rise above a predetermined limit at the outlet-valve system and for closing the outlet-valve system after the injection phase. The outlet-valve system closes off for back-pressure from the cylinder and also prevents lubricant to enter the cylinder unless the outlet-valve is open. For example, the outlet-valve system comprises an outlet non-return valve. In the outlet non-return valve, the outlet-valve-member, for example a ball, ellipsoid, plate, or cylinder, is pre-stressed against an outlet-valve-seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve-member is displaced from its outlet-valve-seat, and the outlet non-return valve opens for injection of lubricant through the nozzle aperture into the cylinder. For example, the outlet-valve spring acts on the valve-member in a direction away from the nozzle aperture, although, an opposite movement is also possible.

For example, the central controller comprises a computer or is connected by an electronic wired or wireless connection to a computer, where the computer is of the type that is configured for monitoring parameters for the actual state and motion of the engine, such that the amount and timing of the lubricant injection is controlled on the basis of the parameters.

Optionally, the injectors are SIP injectors configured to provide a mist of lubricant into the scavenging air of the cylinders. A spray of atomized droplets, also called mist of oil, is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. Examples of such injectors for SIP injection are disclosed in WO2012/126473 and WO2014/048438. Additional options for SIP injectors with electrical valves are found in Danish patent applications DK2017 70936 and DK2017 70940. For example, the injectors comprise a nozzle with a nozzle aperture of between 0.1 and 1 mm, for example between 0.2 and 0.5mm, and are configured for ejecting a spray of atomized droplets, which is also called a mist of oil. The atomization of the spray is due to highly pressurized lubricant in the lubricant injector at the nozzle. The pressure from the lubricator is higher than 10 bar, typically between 20 bar and 120 bar for this high pressure injection. An example is an interval of between 30 and 100 bar. Another example is an interval of between 60 and 120 bar, for example between 60 and 100 bar. The injection time is short, typically in the order of 5-30 milliseconds (msec). However, the injection time can be adjusted to 1 msec or even less than 1 msec, for example down to 0.1 msec.

In the case of SIP injection, the lubricator is operated with the correspondingly necessary parameters, especially the pressure intervals. For example, the method comprises operating the lubrication system with the modified lubricator at a lubricant pressure in the range of 20-100 bar in combination with SIP injectors, injection a mist of atomized droplets of lubricant by the SIP injectors into swirling scavenging air inside the engine cylinder and distributing the droplets onto the cylinder wall during transport of the droplets by swirling motion towards the top dead centre, TDC, of the cylinder.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bar at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

### SHORT DESCRIPTION OF THE DRAWINGS

The invention will be explained in more detail with reference to the drawing, where
- FIG.: 1 is a reproduction of a drawing of an Alpha controller s published on the Internet site http://www.mariness.co.kr/02_business/Doosan%20Retrofit%20Service.pdf? PHPSESSID=fd56da9de6eaca2f1f4465 12e84fcf69
- FIG. 2: is a sketch of part of a cylinder in an engine with a lubrication system;
- FIG. 3: illustrates an example of a lubricator for modification;
- FIG. 4: illustrates an example of a lubricator prior to modification;
- FIG. 5: show microscope images of a valve seat of an Alpha Lubricator, in which a) a new valve contains metal fringes, b) a new valve seat has edges, and c) a used valve seat shows uneven wear;
- FIG. 6: shows measurements of performance of a lubricator before modification after a) 3850 injection cycles and b) 1 million cycles;
- FIG. 7: shows measurements of performance of a modified lubricator after 2 million injection cycles;
- FIG. 8: illustrates an insert with a substituting valve seat;
- FIG. 9: illustrates an insert with a double valve system;
- FIG. 10: illustrates an example of a practical embodiments of an insert;
- FIG. 11: illustrates an insert inside the lubricator, where a) is an overview image, and b) illustrates the insert in greater detail in enlarged view.

### DETAILED DESCRIPTION / PREFERRED EMBODIMENT

FIG. 1 is a reproduction of a drawing of an Alpha controller s published on the Internet site http://www.mariness.co.kr/02_business/Doosan%20Retrofit%20Service.pdf?PHPSES SID=fd56da9de6eaca2flf446512e84fcf69.

For the method as described herein, this drawing of the Alpha Lubricator serves as example for a concrete embodiment of a lubricator that is modified. Accordingly, the explanation as given in the introduction applies for the explanation of the modification equally well.

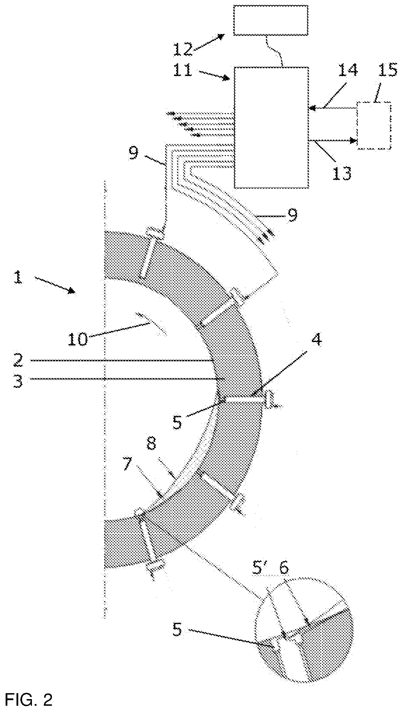

FIG. 2 illustrates one half of a cylinder of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1.

As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

As illustrated, the injectors 4 receive pressurised lubrication oil from a lubricator 11 through lubrication supply lines 9. The supplied oil is typically heated to a specific temperature, for example 50-60 degrees. The lubricator 11 supplies pressurised lubrication oil to the injectors 4 in precisely timed pulses, synchronised with the piston motion in the cylinder 1 of the engine. The injection by the lubricator 11 is controlled by a controller 12. For the synchronisation, the controller 12 monitors parameters for the actual state and motion of the engine, including speed, load, and position of the crankshaft, as the latter reveals the position of the pistons in the cylinders.

Each of the injectors 4 has a nozzle 5 with a nozzle aperture 5' from which lubricant is ejected under high pressure into the cylinder 1, for example in the form of a compact jet or as a fine atomized spray 8 with miniature droplets 7 for SIP injection.

For example for SIP injection, the nozzle aperture has a diameter of between 0.1 and 0.8 mm, such as between 0.2 and 0.5 mm, which at high pressure atomizes the lubricant into a fine spray 8, which is in contrast to a compact jet of lubricant. Pressures are above 10 bar, for example in the range 10-120 bar, optionally 20 to 120 bar or 20 to 100 bar, 30 to 80 bar, or 50 to 80 bar, or 60 to 120 bar, or even at higher pressure than 120 bar, The swirl 10 of the scavenging air in the cylinder 1 transports and presses the spray 8 against the cylinder liner 2 such that an even distribution of lubrication oil on the cylinder liner 2 is achieved.

Optionally, the cylinder liner 2 is provided with free outs 6 for providing adequate space for the spray 8 or jet from the injector 4.

The lubricator 11 is connected to a supply conduit 14 for receiving lubricant from a lubricant supply 15, including an oil pump, and a return conduit 13 for return of lubricant, typically to an oil reservoir, optionally for recirculation of lubricant. The lubricant pressure in the supply conduit 14 is higher than the pressure in the return conduit 13, for example at least two times higher. The lubricant supply conduit 14 is also used for supplying lubricant for lubrication in addition to driving the actuator piston in the lubricator 11.

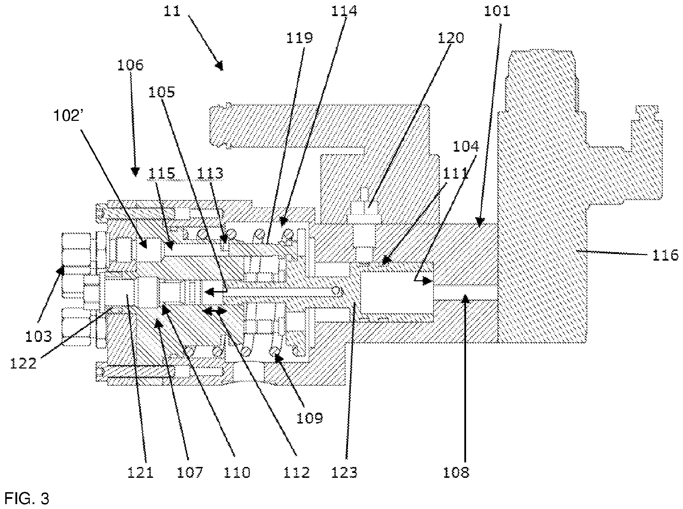

FIG. 3 illustrates an example of a lubricator 11 for modification. The numbering is equal to the modified prior art lubricator of FIG. 1. Prior to modification, the valve-chamber 102' contains the single non-return valve 102 of FIG. 1.

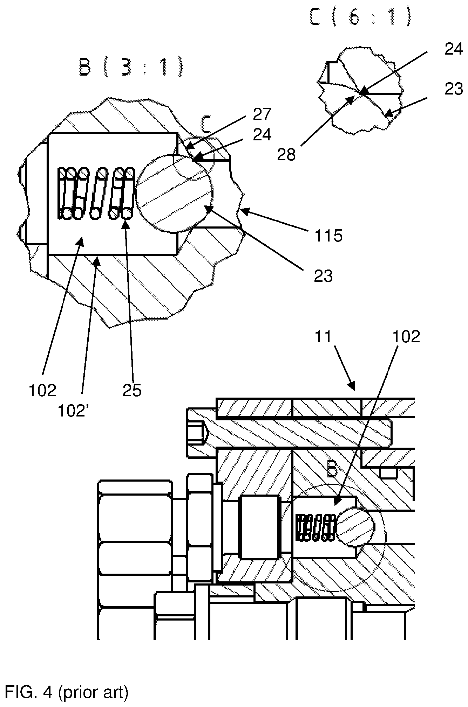

FIG. 4 is a more detailed drawing of the non-return valve 102 in the valve-chamber 102' of prior art lubricator 11 of FIG. 1. Two enlarged portions B and C illustrate details in further magnification of 3 and 6, respectively. The non-return valve 102 comprises a spherical valve-member 23, pre-stressed against a valve-seat 24 by the load from a helical spring 25. The lubricant in the dosing channel 115 displaces the valve-member 23 against the pre-stressing force of the spring 25, once the lubricant in the dosing channel 115 achieved a pressure above a predetermined limit. As illustrated, the valve-seat 24 is a sharp edge, despite the valve-chamber 102' generally having a conical end-portion 27. Thorough study of the early mal-functioning of the lubricator 11 has revealed that leaks are due to tightness problems of the sharp edged valve-seat 24.

An improvement is achieved, if the valve-seat 24 is modified. For example, the valve-seat after modification has a profile that is part of a sphere, optionally having the same radius as the spherical valve-member.

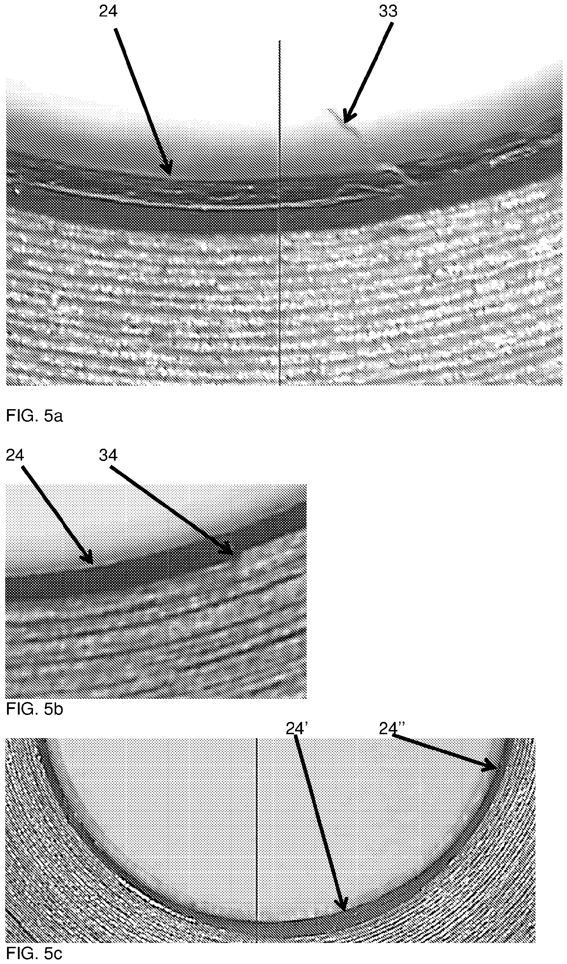

FIG. 5 shows some microscope images of a valve seat of an Alpha Lubricator prior to modification. FIG. 5a shows pronounced roughness of the valve seat as well as metal fringes 35 in in the valve seat of a new Alpha Lubricator, which is detrimental to tightness of the non-return valve. FIG. 5b shows edges 34 in the valve seat 24 of a new Alpha Lubricator, which prevents a proper sealing between the valve seat 24 and the ball member. FIG. 5c shows a micrograph of a used Alpha Lubricator, illustrating sections 24' of the valve seat appearing broader than other sections 24", which is due to elliptical shape of the valve seat. An elliptical valve seat is probably due to uneven wear during use. It does not seal properly any more against a spherical valve member. All these defects in the valve seat, some stemming from a new Alpha Lubricator, others from wear during use, prevent a satisfactory sealing, especially at elevated lubricant pressure.

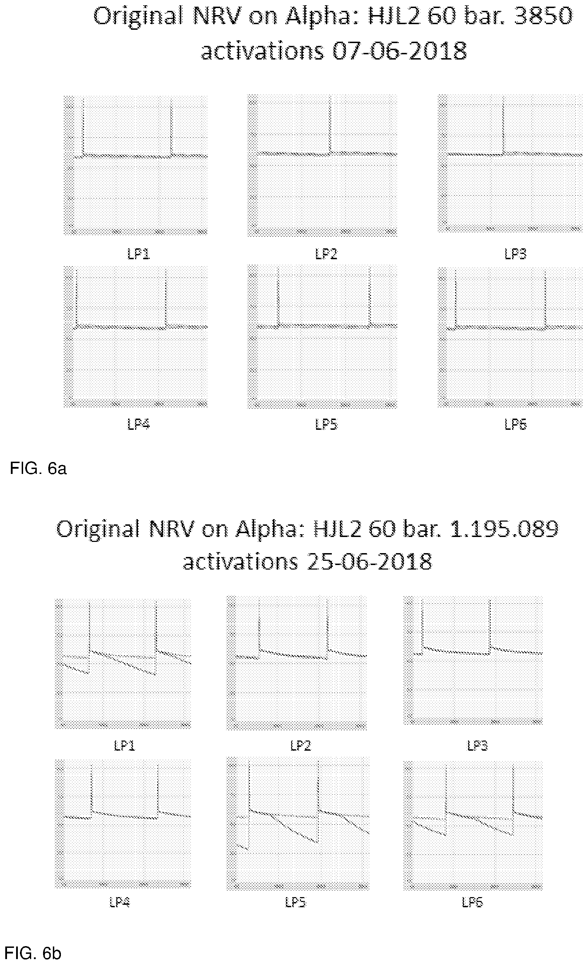

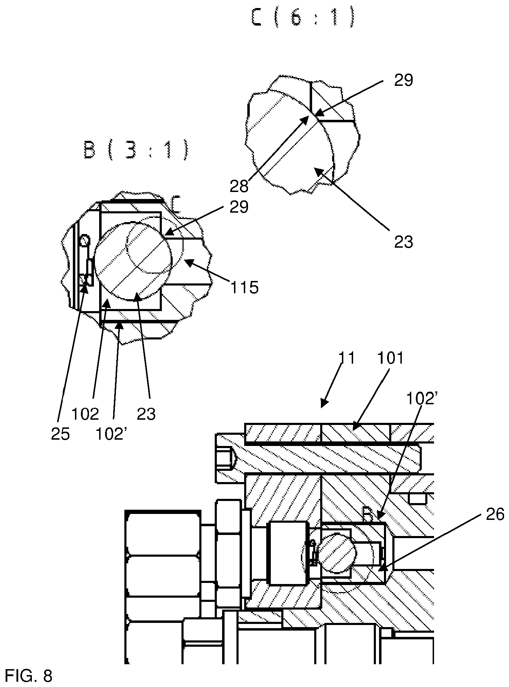

FIG. 6a and 6b show measurements of performance of a lubricator before modification, where the valve-seat 24 was sharp-edged as illustrated in FIG. 4 and defects as in FIGF. 5. The six graphs in FIG. 6a and FIG. 6b are made for the six outlets of the Alpha Lubricator, each outlet having one non-return valve. The measurements in FIG. 8a were made after 3850 injection cycles. The peaks show injections and the horizontal level shows the pressure level in the idle phase. The graphs in FIG. 8b show similar measurements after 1 million cycles. The drop of the solid drawn curves illustrates pressure loss in the idle phase, which is due to leaking non-return valves 102.

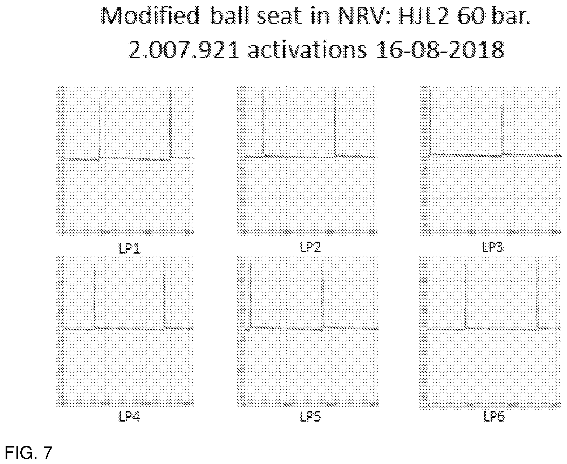

FIG. 7 shows measurements of performance of a modified lubricator after 2 million injection cycles. The experimental results show horizontal pressure curves in the idle phases between the spikes of the injection phases. The horizontal pressure levels of FIG. 7, in contrast to the decreasing pressure curves of FIG 6b, express increased lifetime by more than a factor of 2 of the modified non-return valve 102 with respect to tightness.

The lubricator 11 in the test experiments of FIG. 7 had a valve-seat 24 that was modified to a part-spherical configuration with smaller surface roughness and higher precision with respect to circular symmetry.

The modification of the valve seat for the experiments of FIG. 7 has been made by pressing a deformation-member in the shape of a ball of approximately the same size as the ball-shaped valve-member 23 onto the sharp-edged valve-seat 24 with a force corresponding to 200 kg. This force was sufficient to deform the sharp-edged valve-seat 24 from the configuration of FIG. 4 into a shape of a part of a sphere with less surface roughness and more precise circular symmetry. In the experiment, a spherical deformation member with a surface roughness of 0.06 µm (arithmetic average roughness value Ra) was pressed into the valve seat with a force corresponding to 200 kg, caused deformation, and resulted in a changed surface roughness of 0.8 µm. The width of the ring-shaped valve seat was 0.06 mm. The surface area of the valve seat was in the order of 0.5 mm2.

Deformation by pressing a deformation member into the valve-chamber, for example a steel ball loaded with a force, is a simple way of modifying the sharp-edged valve-seat 24 of FIG. 4.

An even better improvement of the non-return valve is obtained by providing a precisely worked valve insert in which the valve member 23 and the insert valve seat 24 are worked to a precision that an optimum tightness and longevity is obtained.

FIG. 8 illustrates a valve insert 26 that is inserted into the valve chamber 102'. The insert is held in place by shoulders 33 of a front flange 34. In the illustrated embodiment, the spring 25 is shorter that in FIG. 4 due to different position of the spherical valve-member 23.

For example, the insert valve seat 29 has a concave shape, typically part-spherical shape, for example having the same radius of curvature or substantially same radius as the spherical valve-member 23. Due to this part-spherical valve-seat, the contact area 28 between the spherical valve-member 23 and the insert valve set 29 is smoother than between the spherical valve-member 23 and the sharp-edged valve-seat 24 in FIG. 4. Alternatively, the insert valve seat 29 has a concave form with a radius of curvature that is larger than for the valve member. As a further alternative, the final valve seat has a conical shape or a convex toroidal shape.

The insert 26 is a piece that is worked outside the housing 101 of the lubricator 11 and therefore easier to produce with high precision than if the lubricator valve seat 24 is modified by working the material of the housing 101 itself. The lack of precision of the lubricator valve seat 24 in standard lubricators is believed to be due to a compromise of quality versus production time, in addition to the fact that a large piece, such as the housing 101, is not easy to work to a precision as achieved with the much smaller dimensioned separate insert 26. The separate production of the insert 26 as compared to the valve seat 24 of standard lubricators has not only the advantage of higher precision and longevity when modifying used lubricators but is also useful for new lubricators 11 in that the insert 26 can be produced in parallel with the production of the lubricator housing 101, which optimizes production resources, costs and time.

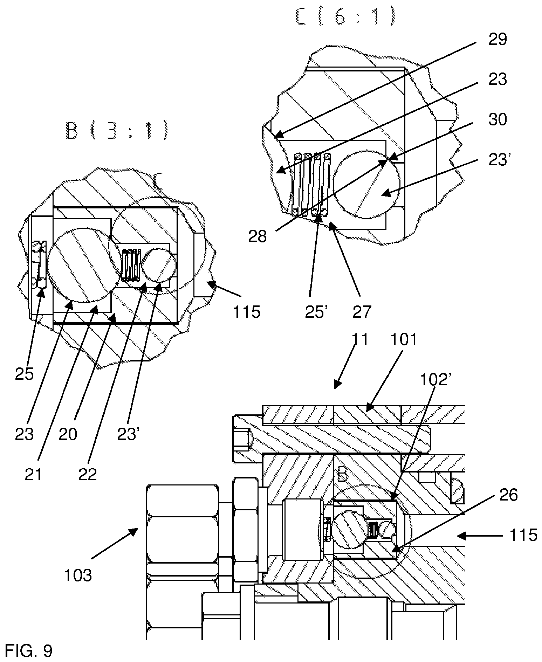

FIG. 9 illustrates a further modification in which an insert 26 has been inserted into the valve-chamber 102'. The insert 26 comprises a double valve system 20 with a first pre-stressed spherical valve-member 23 as part of a first non-return valve 21 and a further spherical valve-member 23' as part of a second non-return valve 22, as well as two part-spherical valve-seats 29, 30', one for each spherical valve-member 23, 23'. The interspace 27 between the two spherical valve-members 23, 23' comprises a further spring 25' in order to keep the innermost spherical valve-member 23', which is smaller', pre-stressed against its valve-seat 30.

In the embodiment of FIG. 9, the first and second non-return valve 21, 22 with the two valve-members 23, 23' are provided in the insert 26 inside the valve-chamber 102'. Once opened, the first non-return valve 21 gives passage to the second non-return valve 22, which when opened, give passage to the pipe 103 for lubricant flow from the lubricator 11 to the injector 4 as long as the pressure is at the increased state in the injection phase. When the oil pressure in the dosing channel 115 decreases below the predetermined limit, the non-return valves 21, 22 close again for the idle phase and until the next injection phase.

Alternatively, not illustrated though, a first valve is provided by an insert 26 inside the valve-chamber 102' and a second valve is provided outside the valve-chamber 102', for example between the lubricator 11 and the pipe 103. In this case, similarly to the embodiment in FIG. 9, the double valve system comprises a first non-return valve by the insert 26 and a second non-return valve connected in series.

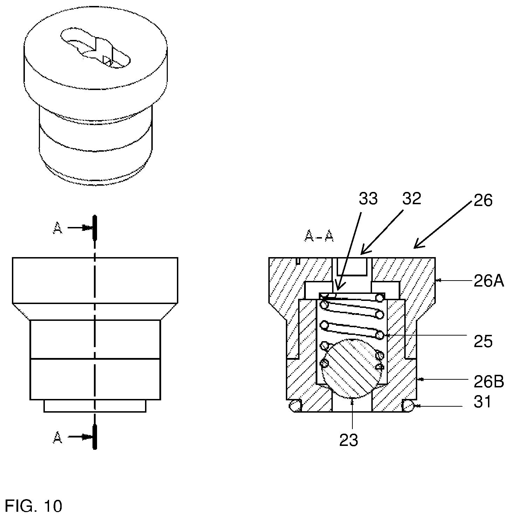

FIG. 10 illustrates an example of a practical embodiments of an insert 26 in a perspective view, a side view and a cross sectional view. The insert 26 is composed of two parts, a downstream part 26A and upstream part 26B, which are screwed together for easy insertion of the spherical valve-member 23 and the spring 25 into the insert 26. For the purpose of tightness, an O-ring 31 is provided at the upstream end of the upstream part 26B. The downstream part 26A comprises an outlet 32 and a shoulder 33 at the outlet, where the shoulder 33 presses against the spring in order to keep it pre-stressed. The shoulder 33 pre-stresses the spring gradually during screw-assembly of the two parts 26A, 26B. Alternatively, to the screw principle for the assembly of the insert 26, the two parts 26A and 26B could also be press fitted together.

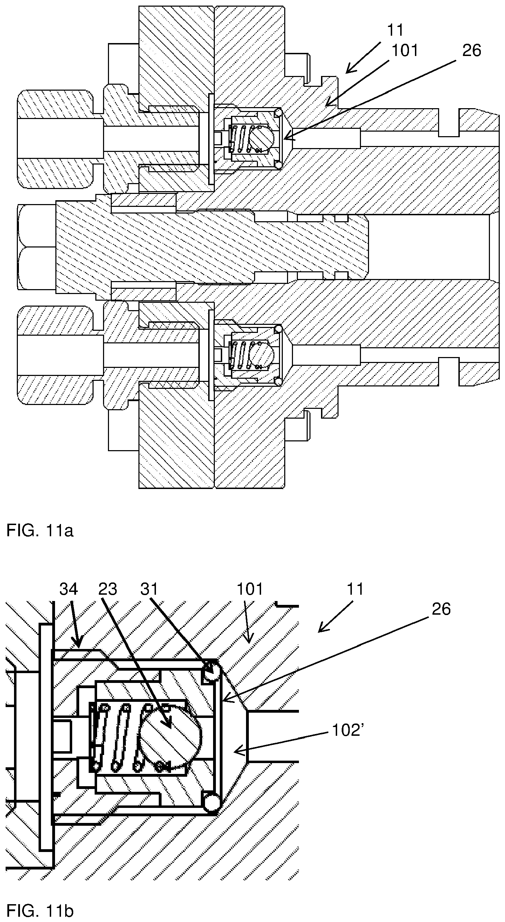

FIG. 11a illustrates an insert 26 of the type as in FIG. 10 when inserted into the valve chamber 102' of a lubricator 11. As illustrated in more detail in FIG. 11b, the O-ring 31 tightens against the housing 101 of the lubricator 11. The particular insert 26 is held in place inside the valve camber 102' by a threaded screw connection 34. However, a tight press-fit could be used alternatively.

## Claims

1. A method of improving the lubrication system of a large slow running engine,
wherein the engine comprises a cylinder (1) with a reciprocal piston inside and with a plurality of lubricant injectors (4) distributed along a perimeter of the cylinder (1) for injection of lubricant into the cylinder (1) at various positions on the perimeter during injection phases;
wherein the lubrication system is configured for providing lubricant to the injectors (4) in the injection phases; wherein the lubrication system comprises a lubricator (11) pipe-connected to each injector (4) by a lubricant feed conduit (9) for providing pressurized lubricant to each injector (4) through the lubricant feed conduit (9) in the injection phases;
wherein the lubricator (11) comprises a housing (101) in which a hydraulic-driven actuator piston (123) is arranged reciprocal along a stroke length,
wherein the housing (101) further contains a plurality of injection plungers (119) and a corresponding plurality of dosing channels (115) as well as non-return valves (102), one for each dosing channel (115), each injection plunger (119) being slidingly arranged in one of the dosing channels (115), wherein the injection plungers (119) are coupled to the actuator piston (123) in order to be moved in common by the actuator piston (123) over the stroke length and as a consequence pressurize lubricant in the dosing channels (115) over a dosing channel distance for expelling the pressurized lubricant from each dosing channel (115) through the corresponding non-return valve (102) for injection of the lubricant into the engine cylinder (1); wherein the dosing channel distance defines the volume of lubricant expelled from the dosing channel (115) through the non-return valve (102) during the injection phase;
wherein each non-return valve (102) is provided in a corresponding valve-chamber (102') in the housing (101) and comprises a valve-member (23) pre-stressed against a lubricator valve-seat (24) by the load of a spring (25);
**characterized in that** the method comprises the steps of:
- removing the spring (25) and valve member (23) from the valve chamber (102') and
- substituting the lubricator valve seat (24) by inserting an insert (26) into the valve-chamber (102'), the insert (26) fitting tightly to the valve chamber (102') and comprising an insert valve-seat (29) that is different to the lubricator valve seat (24);
- providing the insert valve seat (29) with higher dimensional precision than the lubricator valve seat (24) by providing the insert valve seat (29) with a circular symmetric shape wherein the circular symmetry varies by less than 0.2 mm when measured across the insert valve seat (29); and
- providing the insert valve seat (29) with a surface roughness smaller than the surface roughness of the lubricator valve seat (24) by providing a surface roughness of the insert valve seat (29) of less than 12.5µm; and
- subsequently operating the lubricator (11) in the lubrication system of the engine with the insert valve-seat (29).

2. A method according to claim 1, wherein method comprises providing the insert valve seat (29) concave with a first radius of curvature, and the valve member (23) convex with a second radius of curvature equal to or smaller than the first radius of curvature; wherein the first and second radius of curvature is measured orthogonal to the insert valve seat (29).

3. A method according to claim 2, wherein the first radius of curvature is 5-50% larger than the second radius of curvature.

4. A method according to any preceding claims, wherein the method comprises operating the lubricator (11) in the lubrication system for at least 100,000 lubrication injection cycles prior to a modification by inserting the insert (26), and continuing operation of the lubrication system with the lubricator (11) and the insert valve-seat (29) after the modification.

5. A method according to any preceding claim, wherein the method comprises operating the lubrication system by feeding lubricant to the injectors with the modified lubricator (11) at a lubricant pressure in the range of 20-100 bar and injecting a mist of atomized droplets of lubricant by the injectors into swirling scavenging air inside the engine cylinder and distributing the droplets onto the cylinder wall during transport of the droplets by swirling motion towards the top dead centre, TDC, of the cylinder.

6. A method of improving a lubricator (11) for a large slow running engine, the engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; wherein the lubricator (11) is configured for providing pressurized lubricant to the injectors (4) in the injection phases;
wherein the lubricator (11) comprises a housing (101) in which a hydraulic-driven actuator piston (123) is arranged reciprocal along a stroke length,
wherein the housing (101) further contains a plurality of injection plungers (119) and a corresponding plurality of dosing channels (115) as well as non-return valves (102), one for each dosing channel (115), each injection plunger (119) being slidingly arranged in one of the dosing channels (115), wherein the injection plungers (119) are coupled to the actuator piston (123) in order to be moved in common by the actuator piston (123) over the stroke length and as a consequence pressurize lubricant in the dosing channels (115) over a dosing channel distance for expelling the pressurized lubricant from each dosing channels (115) through the corresponding non-return valve (102) for injection of the lubricant into the engine cylinder (1); wherein the dosing channel distance defines the volume of lubricant expelled from the dosing channel (115) through the non-return valve (102) during the injection phase;
wherein each non-return valve (102) is provided in a corresponding valve-chamber (102') in the housing (101) and comprises a valve-member (23) pre-stressed against a lubricator valve-seat (24) by the load of a spring (25);
**characterized in that** the method comprises the steps of:
- removing the spring (25) and valve member (23) from the valve chamber (102') and
- substituting the lubricator valve seat (24) by inserting an insert (26) into the valve-chamber (102'), the insert (26) fitting tightly to the valve chamber (102') and comprising an insert valve-seat (29) that is different to the lubricator valve seat (24);
- providing the insert valve seat (29) with higher dimensional precision than the lubricator valve seat (24) by providing the insert valve seat (29) with a circular symmetric shape wherein the circular symmetry varies by less than 0.2 mm when measured across the insert valve seat (29); and
- providing the insert valve seat (29) with a surface roughness smaller than the surface roughness of the lubricator valve seat (24) by providing a surface roughness of the insert valve seat (29) of less than 12.5µm; and
- subsequently operating the lubricator (11) in a lubrication system of the engine with the insert valve-seat (29).

7. A method according to claim 6, wherein method comprises providing the insert valve seat (29) concave with a first radius of curvature, and the valve member (23) convex with a second radius of curvature equal to or smaller than the first radius of curvature; wherein the first and second radius of curvature is measured orthogonal to the insert valve seat (29).

8. A method according to claim 7, wherein the first radius of curvature is 5-50% larger than the second radius of curvature.

9. A lubricator (11) for a large slow running engine, the engine comprising a cylinder (1) with a reciprocal piston inside and with a plurality of lubricant injectors (4) distributed along a perimeter of the cylinder (1) for injection of lubricant into the cylinder (1) at various positions on the perimeter during injection phases; wherein the lubricator (11) is configured for providing pressurized lubricant to the injectors (4) in the injection phases;
wherein the lubricator (11) comprises a housing (101) in which a hydraulic-driven actuator piston (123) is arranged reciprocal along a stroke length,
wherein the housing (101) further contains a plurality of injection plungers (119) and a corresponding plurality of dosing channels (115) as well as non-return valves (102), one for each dosing channel (115), each injection plunger (119) being slidingly arranged in one of the dosing channels (115), wherein the injection plungers (119) are coupled to the actuator piston (123) in order to be moved in common by the actuator piston (123) over the stroke length and as a consequence pressurize lubricant in the dosing channels (115) over a dosing channel distance for expelling the pressurized lubricant from each dosing channels (115) through the corresponding non-return valve (102) for injection of the lubricant into the engine cylinder (1); wherein the dosing channel distance defines the volume of lubricant expelled from the dosing channel (115) through the non-return valve (102) during the injection phase;
wherein each non-return valve (102) is provided in a corresponding valve-chamber (102') in the housing (101) and comprises a spherical valve-member (23) pre-stressed against a valve-seat (24) by the load of a spring (25);
wherein the valve seat has a diameter of 3 to 10 mm;
wherein the thickness of the ring-formed contact surface between the valve member and the valve seat is in the range of 0.01 mm to 0.5 mm,
**characterized in that** an insert valve-seat (29) is part of an insert (26) that is contained in the valve-chamber (102') as a part separable from the valve chamber (102'),
that the insert valve seat (29) is provided with a circular symmetric shape wherein the circular symmetry varies by less than 0.2 mm when measured across the insert valve seat (29); and
that the insert valve seat (29) is provided with a surface roughness of less than 12.5µm.

10. A lubricator according to claim 9, wherein the insert (26) comprises a double valve system with two serially arranged insert valve seats (29, 30) for two serially arranged non-return valves (21, 22).

11. A lubricator according to claim 10, wherein the two insert valve seats (29, 30) arranged serially as an upstream insert valve seat (30) and a downstream insert valve seat (29), wherein the upstream insert valve seat (30) is smaller than the downstream insert valve seat (29), and an upstream spherical valve member (23') on the upstream insert valve seat (30) is smaller than a downstream spherical valve member (23) on the downstream insert valve seat (29).

12. A lubricator according to claim 11, wherein the upstream valve member (23') is pre-stressed against the upstream insert valve seat (30) by a spring (25') resting against the downstream valve member (23), which in turn is pre-stressed against the downstream insert valve seat by (29) a further and stronger spring (25) in order for the further spring (25) to provide sufficient force for pre-stressing both valve members (23, 23') against their respective seats (29, 30).

13. A lubricator according to anyone of the claims 9-12, wherein the valve seat (29) in the insert (26) is concave with a first radius of curvature, and the valve member (23) in the insert (26) is convex with a second radius of curvature equal to or smaller than the first radius of curvature; wherein the first and second radius of curvature is measured orthogonal to the insert valve seat (29).

14. A lubricator according to claims 13, wherein the first radius of curvature is 5-50% larger than the second radius of curvature.

15. A lubricator according to anyone of the claims 9-14, wherein the insert (26) comprises an assembly of a first insert part (26A) and a second insert part (26B) that are interconnected and configured for insertion of the valve-member (23) and the spring (25) only prior to assembly of the first insert part (26A) with the second insert part (26B), wherein the first insert part (26A) comprises the valve seat (30) and the second insert part (26B) comprises a downstream outlet (32) for lubricant and a shoulder (33) at the outlet (32), wherein the shoulder (33) after assembly presses against the spring (25) in order to keep it pre-stressed against the valve member (23).

## Patentansprüche

1. Verfahren zum Verbessern des Schmiersystems eines großen langsam laufenden Motors,
wobei der Motor einen Zylinder (1) mit einem hin- und hergehenden Kolben im Inneren und mit einer Vielzahl von Schmiermitteleinspritzvorrichtungen (4) umfasst, die zur Einspritzung von Schmiermittel in den Zylinder (1) an verschiedenen Positionen an dem Umfang während Einspritzphasen entlang eines Umfangs des Zylinders (1) verteilt sind;
wobei das Schmiersystem konfiguriert ist, um den Einspritzvorrichtungen (4) in den Einspritzphasen Schmiermittel bereitzustellen; wobei das Schmiersystem eine Schmiervorrichtung (11) umfasst, die mit jeder Einspritzvorrichtung (4) durch eine Schmiermittelzufuhrleitung (9) rohrverbunden ist, um jeder Einspritzvorrichtung (4) durch die Schmiermittelzufuhrleitung (9) in den Einspritzphasen unter Druck stehendes Schmiermittel bereitzustellen;
wobei die Schmiervorrichtung (11) ein Gehäuse (101) umfasst, in dem ein hydraulisch angetriebener Betätigungskolben (123) hin- und hergehend entlang einer Hublänge angeordnet ist,
wobei das Gehäuse (101) ferner eine Vielzahl von Einspritzkolben (119) und eine entsprechende Vielzahl von Dosierkanälen (115) sowie Rückschlagventile (102) umfasst, eines für jeden Dosierkanal (115), wobei jeder Einspritzkolben (119) verschiebbar in einem der Dosierkanäle (115) angeordnet ist, wobei die Einspritzkolben (119) an den Betätigungskolben (123) gekoppelt sind, um gemeinsam mit dem Betätigungskolben (123) über die Hublänge bewegt zu werden und als Folge Schmiermittel in den Dosierkanälen (115) über eine Dosierkanalstrecke unter Druck zu setzen, um das unter Druck gesetzte Schmiermittel aus jedem Dosierkanal (115) durch das entsprechende Rückschlagventil (102) zur Einspritzung des Schmiermittels in den Motorzylinder (1) auszustoßen; wobei die Dosierkanalstrecke das Volumen an Schmiermittel definiert, das aus dem Dosierkanal (115) durch das Rückschlagventil (102) während der Einspritzphase ausgestoßen wird;
wobei jedes Rückschlagventil (102) in einer entsprechenden Ventilkammer (102') in dem Gehäuse (101) bereitgestellt ist und ein Ventilelement (23) umfasst, das durch die Last einer Feder (25) gegen einen Schmiervorrichtungsventilsitz (24) vorgespannt ist;
**dadurch gekennzeichnet, dass** das Verfahren die folgenden Schritte umfasst:
- Entfernen der Feder (25) und des Ventilelements (23) aus der Ventilkammer (102') und
- Ersetzen des Schmiervorrichtungsventilsitzes (24) durch Einsetzen eines Einsatzes (26) in die Ventilkammer (102'), wobei der Einsatz (26) dicht an der Ventilkammer (102') anliegt und einen Einsatz-Ventilsitz (29) aufweist, der sich von dem Schmiervorrichtungsventilsitz (24) unterscheidet;
- Bereitstellen des Einsatz-Ventilsitzes (29) mit einer höheren Maßgenauigkeit als der Schmiervorrichtungsventilsitz (24), indem der Einsatz-Ventilsitz (29) mit einer kreissymmetrischen Form bereitgestellt wird, wobei die Kreissymmetrie wenn gemessen über dem Einsatz-Ventilsitz (29)um weniger als 0,2 mm variiert; und
- Bereitstellen des Einsatz-Ventilsitzes (29) mit einer Oberflächenrauhigkeit, die kleiner als die Oberflächenrauhigkeit des Schmiermittelventilsitzes (24) ist, durch Bereitstellen einer Oberflächenrauhigkeit des Einsatz-Ventilsitzes (29) von weniger als 12,5 µm; und
- anschließendes Betreiben des Schmiervorrichtung (11) im Schmiersystem des Motors mit dem Einsatz-Ventilsitz (29).

2. Verfahren nach Anspruch 1, wobei das Verfahren Bereitstellen des Einsatz-Ventilsitzes (29) konkav mit einem ersten Krümmungsradius und des Ventilelements (23) konvex mit einem zweiten Krümmungsradius, der gleich oder kleiner als der erste Krümmungsradius ist, umfasst; wobei der erste und zweite Krümmungsradius orthogonal zum Einsatz-Ventilsitz (29) gemessen werden.

3. Verfahren nach Anspruch 2, wobei der erste Krümmungsradius 5-50 % größer als der zweite Krümmungsradius ist.

4. Verfahren nach einem der vorhergehenden Ansprüche, wobei das Verfahren Betätigen der Schmiervorrichtung (11) in dem Schmiersystem für zumindest 100.000 Schmiereinspritzzyklen vor einer Modifikation durch Einsetzen des Einsatzes (26) und Fortsetzen der Betätigung des Schmiersystems mit der Schmiervorrichtung (11) und dem Einsatz-Ventilsitz (29) nach der Modifikation umfasst.

5. Verfahren nach einem vorhergehenden Anspruch, wobei das Verfahren Betätigen des Schmiersystems durch Zuführen von Schmiermittel zu den Einspritzvorrichtungen mit der modifizierten Schmiervorrichtung (11) bei einem Schmiermitteldruck in dem Bereich von 20-100 bar und Einspritzen eines Nebels aus zerstäubten Schmiermitteltröpfchen durch die Einspritzvorrichtungen in wirbelnde Spülluft innerhalb des Motorzylinders und Verteilen der Tröpfchen auf der Zylinderwand während Transport der Tröpfchen durch Wirbelbewegung in Richtung des oberen Totpunkts, TDC, des Zylinders umfasst.

6. Verfahren zum Verbessern einer Schmiervorrichtung (11) für einen großen langsam laufenden Motor, wobei der Motor einen Zylinder (1) mit einem sich hin- und herbewegenden Kolben im Inneren und mit einer Vielzahl von Schmiermitteleinspritzvorrichtungen (4) umfasst, die entlang eines Umfangs des Zylinders (1) zum Einspritzen von Schmiermittel in den Zylinder (1) an verschiedenen Positionen des Umfangs während der Einspritzphasen verteilt sind; wobei die Schmiervorrichtung (11) dazu konfiguriert ist, den Einspritzvorrichtungen (4) in den Einspritzphasen unter Druck stehenden Schmierstoff bereitzustellen;
wobei die Schmiervorrichtung (11) ein Gehäuse (101) umfasst, in dem ein hydraulisch angetriebener Betätigungskolben (123) hin- und hergehend entlang einer Hublänge angeordnet ist,
wobei das Gehäuse (101) ferner eine Vielzahl von Einspritzkolben (119) und eine entsprechende Vielzahl von Dosierkanälen (115) sowie Rückschlagventile (102) umfasst, eines für jeden Dosierkanal (115), wobei jeder Einspritzkolben (119) verschiebbar in einem der Dosierkanäle (115) angeordnet ist, wobei die Einspritzkolben (119) an den Betätigungskolben (123) gekoppelt sind, um gemeinsam mit dem Betätigungskolben (123) über die Hublänge bewegt zu werden und als Folge Schmiermittel in den Dosierkanälen (115) über eine Dosierkanalstrecke unter Druck zu setzen, um das unter Druck gesetzte Schmiermittel aus jedem der Dosierkanäle (115) durch das entsprechende Rückschlagventil (102) zur Einspritzung des Schmiermittels in den Motorzylinder (1) auszustoßen; wobei die Dosierkanalstrecke das Volumen an Schmiermittel definiert, das aus dem Dosierkanal (115) durch das Rückschlagventil (102) während der Einspritzphase ausgestoßen wird;
wobei jedes Rückschlagventil (102) in einer entsprechenden Ventilkammer (102') in dem Gehäuse (101) bereitgestellt ist und ein Ventilelement (23) umfasst, das durch die Last einer Feder (25) gegen einen Schmiervorrichtungsventilsitz (24) vorgespannt ist;
**dadurch gekennzeichnet, dass** das Verfahren die folgenden Schritte umfasst:
- Entfernen der Feder (25) und des Ventilelements (23) aus der Ventilkammer (102') und
- Ersetzen des Schmiervorrichtungsventilsitzes (24) durch Einsetzen eines Einsatzes (26) in die Ventilkammer (102'), wobei der Einsatz (26) dicht an der Ventilkammer (102') anliegt und einen Einsatz-Ventilsitz (29) aufweist, der sich von dem Schmiervorrichtungsventilsitz (24) unterscheidet;
- Bereitstellen des Einsatz-Ventilsitzes (29) mit einer höheren Maßgenauigkeit als der Schmiervorrichtungsventilsitz (24), indem der Einsatz-Ventilsitz (29) mit einer kreissymmetrischen Form bereitgestellt wird, wobei die Kreissymmetrie wenn gemessen über dem Einsatz-Ventilsitz (29)um weniger als 0,2 mm variiert; und
- Bereitstellen des Einsatz-Ventilsitzes (29) mit einer Oberflächenrauhigkeit, die kleiner als die Oberflächenrauhigkeit des Schmiermittelventilsitzes (24) ist, durch Bereitstellen einer Oberflächenrauhigkeit des Einsatz-Ventilsitzes (29) von weniger als 12,5 µm; und
- anschließendes Betreiben des Schmiervorrichtung (11) in einem Schmiersystem des Motors mit dem Einsatz-Ventilsitzes (29) .

7. Verfahren nach Anspruch 6, wobei das Verfahren Bereitstellen des Einsatz-Ventilsitzes (29) konkav mit einem ersten Krümmungsradius und des Ventilelements (23) konvex mit einem zweiten Krümmungsradius, der gleich oder kleiner als der erste Krümmungsradius ist, umfasst; wobei der erste und zweite Krümmungsradius orthogonal zum Einsatz-Ventilsitz (29) gemessen werden.

8. Verfahren nach Anspruch 7, wobei der erste Krümmungsradius 5-50 % größer als der zweite Krümmungsradius ist.

9. Schmiervorrichtung (11) für einen großen langsam laufenden Motor, wobei der Motor einen Zylinder (1) mit einem sich hin- und herbewegenden Kolben im Inneren und mit einer Vielzahl von Schmiermitteleinspritzvorrichtungen (4) umfasst, die entlang eines Umfangs des Zylinders (1) zum Einspritzen von Schmiermittel in den Zylinder (1) an verschiedenen Positionen des Umfangs während der Einspritzphasen verteilt sind; wobei die Schmiervorrichtung (11) dazu konfiguriert ist, den Einspritzvorrichtungen (4) in den Einspritzphasen unter Druck stehenden Schmierstoff bereitzustellen;
wobei die Schmiervorrichtung (11) ein Gehäuse (101) umfasst, in dem ein hydraulisch angetriebener Betätigungskolben (123) hin- und hergehend entlang einer Hublänge angeordnet ist,
wobei das Gehäuse (101) ferner eine Vielzahl von Einspritzkolben (119) und eine entsprechende Vielzahl von Dosierkanälen (115) sowie Rückschlagventile (102) umfasst, eines für jeden Dosierkanal (115), wobei jeder Einspritzkolben (119) verschiebbar in einem der Dosierkanäle (115) angeordnet ist, wobei die Einspritzkolben (119) an den Betätigungskolben (123) gekoppelt sind, um gemeinsam mit dem Betätigungskolben (123) über die Hublänge bewegt zu werden und als Folge Schmiermittel in den Dosierkanälen (115) über eine Dosierkanalstrecke unter Druck zu setzen, um das unter Druck gesetzte Schmiermittel aus jedem der Dosierkanäle (115) durch das entsprechende Rückschlagventil (102) zur Einspritzung des Schmiermittels in den Motorzylinder (1) auszustoßen; wobei die Dosierkanalstrecke das Volumen an Schmiermittel definiert, das aus dem Dosierkanal (115) durch das Rückschlagventil (102) während der Einspritzphase ausgestoßen wird;
wobei jedes Rückschlagventil (102) in einer entsprechenden Ventilkammer (102') in dem Gehäuse (101) bereitgestellt ist und ein kugelförmiges Ventilelement (23) umfasst, das durch die Last einer Feder (25) gegen einen Ventilsitz (24) vorgespannt ist;
wobei der Ventilsitz einen Durchmesser von 3 bis 10 mm aufweist;
wobei die Dicke der ringförmigen Kontaktfläche zwischen dem Ventilelement und dem Ventilsitz in dem Bereich von 0,01 mm bis 0,5 mm liegt,
**dadurch gekennzeichnet, dass** ein Ventilsitz-Einsatz (29) Teil eines Einsatzes (26) ist, der in der Ventilkammer (102') als ein von der Ventilkammer (102') trennbares Teil enthalten ist,
dass der Einsatz-Ventilsitz (29) mit einer kreissymmetrischen Form bereitgestellt ist, wobei die Kreissymmetrie um weniger als 0,2 mm variiert, wenn über den Einsatz-Ventilsitz (29) gemessen wird; und
dass der Einsetzventilsitz (29) mit einer Oberflächenrauhigkeit von weniger als 12,5 µm bereitgestellt ist.

10. Schmiervorrichtung nach Anspruch 9, wobei der Einsatz (26) ein Doppelventilsystem mit zwei seriell angeordneten Einsatz-Ventilsitzen (29, 30) für zwei seriell angeordnete Rückschlagventile (21, 22) umfasst.

11. Schmiervorrichtung nach Anspruch 10, wobei die beiden Einsatz-Ventilsitze (29, 30) hintereinander als ein stromaufwärts gelegener Einsatz-Ventilsitz (30) und ein stromabwärts gelegener Einsatz-Ventilsitz (29) angeordnet sind, wobei der stromaufwärts gelegene Einsatz-Ventilsitz (30) kleiner ist als der stromabwärts gelegene Einsatz-Ventilsitz (29) und ein stromaufwärts gelegenes kugelförmiges Ventilelement (23') am stromaufwärts gelegenen Einsatz-Ventilsitz (30) kleiner ist als ein stromabwärts gelegenes kugelförmiges Ventilelement (23) am stromabwärts gelegenen Einsatz-Ventilsitz (29).

12. Schmiervorrichtung nach Anspruch 11, wobei das stromaufwärts gelegene Ventilelement (23') durch eine Feder (25'), die an dem stromabwärts gelegenen Ventilelement (23) anliegt, gegen den stromaufwärts gelegenen Einsatz-Ventilsitz (30) vorgespannt wird, der wiederum durch eine weitere und stärkere Feder (25) gegen den stromabwärts gelegenen Einsatz-Ventilsitz (29) vorgespannt wird, damit die weitere Feder (25) eine ausreichende Kraft zum Vorspannen beider Ventilelemente (23, 23') gegen ihre jeweiligen Sitze (29, 30) aufbringt.

13. Schmiervorrichtung nach einem der Ansprüche 9-12, wobei der Ventilsitz (29) in dem Einsatz (26) konkav mit einem ersten Krümmungsradius ist und das Ventilelement (23) in dem Einsatz (26) konvex mit einem zweiten Krümmungsradius, der gleich oder kleiner als der erste Krümmungsradius ist; wobei der erste und zweite Krümmungsradius orthogonal zum Einsatz-Ventilsitz (29) gemessen werden.

14. Schmiervorrichtung nach Anspruch 13, wobei der erste Krümmungsradius 5-50 % größer als der zweite Krümmungsradius ist.

15. Schmiervorrichtung nach einem der Ansprüche 9-14, wobei der Einsatz (26) eine Baugruppe aus einem ersten Einsatzteil (26A) und einem zweiten Einsatzteil (26B) umfasst, die miteinander verbunden und zum Einsetzen des Ventilelements (23) und der Feder (25) nur vor dem Zusammenbau des ersten Einsatzteils (26A) mit dem zweiten Einsatzteil (26B) konfiguriert sind, wobei das erste Einsatzteil (26A) den Ventilsitz (30) und das zweite Einsatzteil (26B) einen stromabwärts gelegenen Auslass (32) für Schmiermittel und eine Schulter (33) am Auslass (32) aufweist, wobei die Schulter (33) nach dem Zusammenbau gegen die Feder (25) drückt, um sie gegen das Ventilelement (23) vorgespannt zu halten.

## Revendications

1. Procédé d'amélioration du système de lubrification d'un gros moteur lent,
dans lequel le moteur comprend un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à différentes positions sur le périmètre lors de phases d'injection ;
dans lequel le système de lubrification est conçu pour fournir du lubrifiant aux injecteurs (4) dans les phases d'injection ; dans lequel le système de lubrification comprend un lubrifiant (11) relié par tuyau à chaque injecteur (4) par un conduit d'alimentation en lubrifiant (9) pour fournir du lubrifiant sous pression à chaque injecteur (4) à travers le conduit d'alimentation en lubrifiant (9) dans les phases d'injection ;
dans lequel le lubrifiant (11) comprend un boîtier (101) dans lequel un piston actionneur (123) à entraînement hydraulique est disposé de façon réciproque le long d'une longueur de course,
dans lequel le boîtier (101) contient en outre une pluralité de plongeurs d'injection (119) et une pluralité correspondante de canaux de dosage (115) ainsi que des soupapes de retenue (102), une pour chaque canal de dosage (115), chaque plongeur d'injection (119) étant disposé de manière coulissante dans l'un des canaux de dosage (115), dans lequel les plongeurs d'injection (119) sont couplés au piston actionneur (123) afin d'être déplacés solidairement par le piston actionneur (123) sur la longueur de course et en conséquence mettre sous pression le lubrifiant dans les canaux de dosage (115) sur une distance de canal de dosage pour expulser le lubrifiant sous pression de chaque canal de dosage (115) à travers la soupape de retenue (102) correspondante pour l'injection du lubrifiant dans le cylindre de moteur (1) ; dans lequel la distance de canal de dosage définit le volume de lubrifiant expulsé du canal de dosage (115) à travers la soupape de retenue (102) pendant la phase d'injection ;
dans lequel chaque soupape de retenue (102) est prévue dans une chambre de soupape (102') correspondante dans le boîtier (101) et comprend un élément de soupape (23) précontraint contre un siège de soupape de lubrifiant (24) par la charge d'un ressort (25) ;
**caractérisé en ce que** le procédé comprend les étapes :
- de retrait du ressort (25) et de l'élément de soupape (23) de la chambre de soupape (102') et
- de substitution du siège de soupape de lubrifiant (24) par insertion d'un insert (26) dans la chambre de soupape (102'), l'insert (26) s'adaptant étroitement à la chambre de soupape (102') et comprenant un siège de soupape d'insert (29) différent du siège de soupape de lubrifiant (24) ;
- de fourniture au siège de soupape d'insert (29) d'une précision dimensionnelle supérieure à celle du siège de soupape de lubrifiant (24) en fournissant au siège de soupape d'insert (29) une forme symétrique circulaire, dans lequel la symétrie circulaire varie de moins de 0,2 mm lorsqu'elle est mesurée à travers le siège de soupape d'insert (29) ; et
- de fourniture au siège de soupape d'insert (29) d'une rugosité de surface inférieure à la rugosité de surface du siège de soupape de lubrifiant (24) en fournissant une rugosité de surface du siège de soupape d'insert (29) inférieure à 12,5 µm ; et
- de fonctionnement ultérieur du lubrifiant (11) dans le système de lubrification du moteur avec le siège de soupape d'insert (29).

2. Procédé selon la revendication 1, dans lequel le procédé comprend la fourniture du siège de soupape d'insert (29) d'une forme concave avec un premier rayon de courbure, et de l'élément de soupape (23) d'une forme convexe avec un second rayon de courbure égal ou inférieur au premier rayon de courbure ; dans lequel les premier et second rayons de courbure sont mesurés dans un plan orthogonal au siège de soupape d'insert (29).

3. Procédé selon la revendication 2, dans lequel le premier rayon de courbure est de 5 à 50 % plus grand que le second rayon de courbure.

4. Procédé selon l'une quelconque des revendications précédentes, dans lequel le procédé comprend le fonctionnement du lubrifiant (11) dans le système de lubrification pendant au moins 100 000 cycles d'injection de lubrification avant une modification en insérant l'insert (26) et la poursuite du fonctionnement du système de lubrification avec le lubrifiant (11) et le siège de soupape d'insert (29) après la modification.

5. Procédé selon une quelconque revendication précédente, dans lequel le procédé comprend le fonctionnement du système de lubrification en alimentant en lubrifiant les injecteurs avec le lubrifiant (11) modifié à une pression de lubrifiant dans la plage de 20 à 100 bars et en injectant un brouillard de gouttelettes atomisées de lubrifiant par les injecteurs en tourbillonnant l'air de balayage à l'intérieur du cylindre moteur et en répartissant les gouttelettes sur la paroi de cylindre lors du transport des gouttelettes par mouvement tourbillonnaire vers le point mort haut, PMH, du cylindre.

6. Procédé d'amélioration d'un lubrifiant (11) pour un gros moteur lent, le moteur comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à différentes positions sur le périmètre lors des phases d'injection ; dans lequel le lubrifiant (11) est conçu pour fournir du lubrifiant sous pression aux injecteurs (4) dans les phases d'injection ;
dans lequel le lubrifiant (11) comprend un boîtier (101) dans lequel un piston actionneur (123) à entraînement hydraulique est disposé de façon réciproque le long d'une longueur de course,
dans lequel le boîtier (101) contient en outre une pluralité de plongeurs d'injection (119) et une pluralité correspondante de canaux de dosage (115) ainsi que des soupapes de retenue (102), une pour chaque canal de dosage (115), chaque plongeur d'injection (119) étant agencé de manière coulissante dans l'un des canaux de dosage (115), dans lequel les plongeurs d'injection (119) sont couplés au piston actionneur (123) afin d'être déplacés solidairement par le piston actionneur (123) sur la longueur de course et en conséquence mettre sous pression le lubrifiant dans les canaux de dosage (115) sur une distance de canal de dosage pour expulser le lubrifiant sous pression de chaque canal de dosage (115) à travers la soupape de retenue (102) correspondante pour l'injection du lubrifiant dans le cylindre de moteur (1) ; dans lequel la distance de canal de dosage définit le volume de lubrifiant expulsé du canal de dosage (115) à travers la soupape de retenue (102) pendant la phase d'injection ;
dans lequel chaque soupape de retenue (102) est prévue dans une chambre de soupape (102') correspondante dans le boîtier (101) et comprend un élément de soupape (23) précontraint contre un siège de soupape de lubrifiant (24) par la charge d'un ressort (25) ;
**caractérisé en ce que** le procédé comprend les étapes :
- de retrait du ressort (25) et de l'élément de soupape (23) de la chambre de soupape (102') et
- de substitution du siège de soupape de lubrifiant (24) par insertion d'un insert (26) dans la chambre de soupape (102'), l'insert (26) s'adaptant étroitement à la chambre de soupape (102') et comprenant un siège de soupape d'insert (29) différent du siège de soupape de lubrifiant (24) ;
- de fourniture au siège de soupape d'insert (29) d'une précision dimensionnelle supérieure à celle du siège de soupape de lubrifiant (24) en fournissant au siège de soupape d'insert (29) une forme symétrique circulaire, dans lequel la symétrie circulaire varie de moins de 0,2 mm lorsqu'elle est mesurée à travers le siège de soupape d'insert (29) ; et
- de fourniture au siège de soupape d'insert (29) d'une rugosité de surface inférieure à la rugosité de surface du siège de soupape de lubrifiant (24) en fournissant une rugosité de surface du siège de soupape d'insert (29) inférieure à 12,5 µm ; et
- de fonctionnement ultérieur du lubrifiant (11) dans un système de lubrification du moteur avec le siège de soupape d'insert (29).

7. Procédé selon la revendication 6, dans lequel le procédé comprend la fourniture du siège de soupape d'insert (29) pour lui donner une forme concave avec un premier rayon de courbure, et la fourniture à l'élément de soupape (23) d'une forme convexe avec un second rayon de courbure égal ou inférieur au premier rayon de courbure ; dans lequel les premier et second rayons de courbure sont mesurés dans un plan orthogonal au siège de soupape d'insert (29).

8. Procédé selon la revendication 7, dans lequel le premier rayon de courbure est de 5 à 50 % plus grand que le second rayon de courbure.

9. Lubrifiant (11) pour un gros moteur lent, le moteur comprenant un cylindre (1) avec un piston alternatif à l'intérieur et avec une pluralité d'injecteurs de lubrifiant (4) répartis le long d'un périmètre du cylindre (1) pour l'injection de lubrifiant dans le cylindre (1) à différentes positions sur le périmètre lors des phases d'injection ; dans lequel le lubrifiant (11) est conçu pour fournir du lubrifiant sous pression aux injecteurs (4) dans les phases d'injection ;
dans lequel le lubrifiant (11) comprend un boîtier (101) dans lequel un piston actionneur (123) à entraînement hydraulique est disposé de façon réciproque le long d'une longueur de course,
dans lequel le boîtier (101) contient en outre une pluralité de plongeurs d'injection (119) et une pluralité correspondante de canaux de dosage (115) ainsi que des soupapes de retenue (102), une pour chaque canal de dosage (115), chaque plongeur d'injection (119) étant agencé de manière coulissante dans l'un des canaux de dosage (115), dans lequel les plongeurs d'injection (119) sont couplés au piston actionneur (123) afin d'être déplacés solidairement par le piston actionneur (123) sur la longueur de course et en conséquence mettre sous pression le lubrifiant dans les canaux de dosage (115) sur une distance de canal de dosage pour expulser le lubrifiant sous pression de chaque canal de dosage (115) à travers la soupape de retenue (102) correspondante pour l'injection du lubrifiant dans le cylindre de moteur (1) ; dans lequel la distance de canal de dosage définit le volume de lubrifiant expulsé du canal de dosage (115) à travers la soupape de retenue (102) pendant la phase d'injection ;
dans lequel chaque soupape de retenue (102) est prévue dans une chambre de soupape (102') correspondante dans le boîtier (101) et comprend un élément de soupape (23) sphérique précontraint contre un siège de soupape (24) par la charge d'un ressort (25) ;
dans lequel le siège de soupape a un diamètre de 3 à 10 mm ;
dans lequel l'épaisseur de la surface de contact annulaire entre l'élément de soupape et le siège de soupape est comprise entre 0,01 mm et 0,5 mm,
**caractérisé en ce que** le siège de soupape d'insert (29) fait partie d'un insert (26) contenu dans la chambre de soupape (102') en tant que partie séparable de la chambre de soupape (102'),
**en ce que** le siège de soupape d'insert (29) présente une forme symétrique circulaire dans lequel la symétrie circulaire varie de moins de 0,2 mm lorsqu'elle est mesurée à travers le siège de soupape d'insert (29) ; et
**en ce que** le siège de soupape d'insert (29) présente une rugosité de surface inférieure à 12,5 um.

10. Lubrifiant selon la revendication 9, dans lequel l'insert (26) comprend un système de soupape double avec deux sièges de soupape d'insert (29, 30) disposés en série pour deux soupapes de retenue (21, 22) disposées en série.

11. Lubrifiant selon la revendication 10, dans lequel les deux sièges de soupape d'insert (29, 30) disposés en série en siège de soupape d'insert amont (30) et en siège de soupape d'insert aval (29), dans lequel le siège de soupape d'insert amont (30) est plus petit que le siège de soupape d'insert aval (29), et un élément de soupape sphérique amont (23') sur le siège de soupape d'insert amont (30) est plus petit qu'un élément de soupape sphérique aval (23) sur le siège de soupape aval (29).

12. Lubrifiant selon la revendication 11, dans lequel l'élément de soupape amont (23') est précontraint contre le siège de soupape d'insert amont (30) par un ressort (25') en appui contre l'élément de soupape aval (23), lui-même précontraint contre le siège de soupape d'insert aval par (29) un autre ressort (25) plus fort pour que l'autre ressort (25) fournisse une force suffisante pour précontraindre les deux éléments de soupapes (23, 23') contre leurs sièges (29, 30) respectifs.

13. Lubrifiant selon l'une quelconque des revendications 9 à 12, dans lequel le siège de soupape (29) dans l'insert (26) est concave avec un premier rayon de courbure, et l'élément de soupape (23) dans l'insert (26) est convexe avec un second rayon de courbure égal ou inférieur au premier rayon de courbure ; dans lequel les premier et second rayons de courbure sont mesurés dans un plan orthogonal au siège de soupape d'insert (29).

14. Lubrifiant selon la revendication 13, dans lequel le premier rayon de courbure est de 5 à 50 % plus grand que le second rayon de courbure.

15. Lubrifiant selon l'une quelconque des revendications 9 à 14, dans lequel l'insert (26) comprend un ensemble d'une première partie d'insert (26A) et d'une seconde partie d'insert (26B) qui sont interconnectées et conçues pour l'insertion de l'élément de soupape (23) et du ressort (25) uniquement avant l'assemblage de la première partie d'insert (26A) avec la seconde partie d'insert (26B), dans lequel la première partie d'insert (26A) comprend le siège de soupape (30) et la seconde partie d'insert (26B) comprend une sortie aval (32) pour lubrifiant et un épaulement (33) à la sortie (32), dans lequel l'épaulement (33) après assemblage vient en appui contre le ressort (25) pour le maintenir précontraint contre l'élément de soupape (23).
